# EUROPÄISCHE PATENTSCHRIFT

(11) **EP 1 686 767 B1**
(45) Veröffentlichungstag und Bekanntmachung des Hinweises auf die Patenterteilung: **07.11.2007**
(21) Anmeldenummer: 06000870.3
(22) Anmeldetag: 17.01.2006
(51) Int. Cl.: H04L 29/12, G05B 19/418

(54) **Verfahren und Vorrichtung zur Vergabe von Netzwerk-Teilnehmergeräteadressen im Profinet-IO Netzwerk**
Method and device for allocation of network terminal device addresses in a Profinet-IO network
Méthode et dispositiv pour l'attribution d'adresses aux appareils utilisateurs d'un réseau Profinet-IO

(30) Priorität: 28.01.2005 DE 102005004265
(43) Veröffentlichungstag der Anmeldung: 02.08.2006
(73) Patentinhaber: Phoenix Contact GmbH & Co. KG, 32825 Blomberg (DE)
(72) Erfinder: Leßmann, Gunnar, Dipl.-Ing., 33039 Nieheim (DE)
(74) Vertreter: Kampfenkel, Klaus

(56) Entgegenhaltungen:
- US-A1- 2004 139 187
- POSCHMANN A ET AL: "Architecture and model of profinet IO" AFRICON, 2004. 7TH AFRICON CONFERENCE IN AFRICA GABORONE, BOTSWANA SEPT. 15-17, 2004, PISCATAWAY, NJ, USA,IEEE, Bd. 2, 15. September 2004 (2004-09-15), Seiten 1213-1218, XP010780661 ISBN: 0-7803-8605-1
- MARC GIANATTI: "The development of a portable network (IP) diagnostic tool" BACHELOR THESIS, [Online] 27. Oktober 2000 (2000-10-27), Seiten 65-67, XP002385739 Gefunden im Internet: URL:http://thesis.ece.curtin.edu.au/Thesis %202000/GIANATTI%20M.C/Formal%20Report%203 .pdf> [gefunden am 2006-06-16]

## Beschreibung

Die Erfindung betrifft ein Verfahren und eine Vorrichtung zur Vergabe von Teilnehmergeräteadressen in einem Profinet-IO Netzwerk.

Die Vergabe von Adressen ist beispielsweise bekannt aus US 2004/139187 A1.

Bekanntermaßen ist das Profinet-IO der Ethernet-basierte Automatisierungsstandard der Profibus-Nutzerorganisation (PNO) und folgt im Wesentlichen zu 100 % dem Ethernet-Standard (nach IEEE 802.3), arbeitet voll-duplex und unterstützt switched Ethernet mit einer Übertragungsrate von 100 Mb/s. Hierdurch stehen Prozess- und Fertigungsdaten nicht nur auf der Feldebene zur Verfügung, sondern können nahtlos in bereichsübergreifende Datenerfassungssysteme eingehen, so dass eine Integration dezentraler Peripherie auch in vertikaler Richtung ermöglicht wird.

Im Gegensatz zu Profibus, der nach dem "Master-Slave-Modell" arbeitet, arbeitet Profinet-IO grundsätzlich nach dem Producer-Consumer-Modell. Hierdurch spart man sich unter anderem Aufruftelegramme und erreicht mit einem Telegramm gleich eine ganze Gruppe von "Consumern", also den im Profinet-IO Netzwerk angeschalteten Netzwerkteilnehmern, wie E/A-Komponenten und Feldgeräten, so dass hierdurch eine sehr effiziente homogene Integration der Automatisierungswelt in die IT-Umgebung ermöglicht wird. Ferner ist neben den bekannten und bewährten Standards von Profibus darüber hinaus auch die Integration anderer Feldbus-Konzepte innerhalb des Profinet-IO-Konzeptes gewährleistet.

Ein wesentlicher Unterschied zwischen Profibus und Profinet-IO Anwendungen besteht in der unterschiedlichen Adressierung der Geräte der in einem jeweiligen Netzwerk einzubindenden bzw. eingebundenen Netzwerkteilnehmer.

Im Gegensatz zum Profibus erfolgt die Addressierung der jeweils eingebundenen Netzwerkteilnehmer innnerhalb eines Profinet-IO Netzwerkes mittels der jedem Teilnehmergerät eigenen und eindeutigen MAC-Adresse sowie einer dieser physikalischen Adresse eindeutig zugeordneten logischen IP-Adresse. Die Vergabe von IP-Adressen erfolgt herkömmlicherweise über DHCP (Dynamic Host Configuration Protocol), einem diesem vergleichbaren Mechanismus oder über das PROFINET IO spezifische Protokoll DCP (Discovery Configuration Protocol). Spezifikationen empfehlen die Verwendung von DHCP in großen und DCP in kleinen Anlagen.

Vor der Zuordnung der physikalischen und logischen Netzwerk-Adressen muss jedoch jedem Profinet-IO Netzwerkteilnehmer ein symbolischer Namen zur Identifizierung im Netzwerk zur anschließenden eindeutigen Adressierung vergeben werden. Dieser symbolische Name, im folgenden Stationsidentifikator bezeichnet, muss üblicherweise DNS (Domain Name Service) konform aufgebaut sein und wird auf dem Netzwerkteilnehmer eingestellt, bevor dieser in einem Profinet-IO System betrieben werden kann. Diese Vergabe wird häufig auch als "Taufe" bezeichnet.

Die Vergabe des Stationsidentifikators wird hierbei manuell mittels eines Softwaretools vergeben, wobei eine Zuordnung zwischen dem zu vergebenden Stationsidentifikator und dem Teilnehmer über die eindeutige Ethernet MAC-Adresse erfolgt. Die Einstellung wird daraufhin vom Anwender über ein Softwaretool mittels eines Netzwerkteilnehmerspezifischen Engineeringwerkzeugs oder über das Netzwerk durch Unterstützung definierter DCP-Dienste durchgeführt.

Der Anwender muss bei der Vergabe des Stationsidentifikators somit in Kenntnis der jeweiligen MAC-Adresse sein.

Ob ein Netzwerkteilnehmer anschließend seine IP-Adresse vom IO-Controller bekommt oder sie von einem DHCP-Server bezieht bzw. aus diesem ausliest, kann hierbei ferner festgelegt werden.

Vergibt der IO-Controller IP-Adressen so bekommt der IO-Controller von seinem Engineeringsystem eine Sollkonfiguration von IO-Netzwerkteilnehmergeräten geladen, wobei zu jedem IO-Netzwarkteilnehmergerät der Stationsidentifikator vorgegeben ist.

Mit einem speziellen DCP-Dienst (Identify) wird daraufhin per Multicast der Netzwerkteilnehmer gesucht, der zu einem bestimmten Stationsidentifikator gehört. In der Antwort schickt dieser Netzwerkteilnehmer seine eigene MAC-Adresse zurück. Anschließend wird mit einem DCP-Dienst (Set-IP) jedem IO-Netzwerkteilnehmer vom IC-Controller seine Soll-IP Adresse zugeordnet. Der Netzwerkteilnehmer muss nach dieser Zuordnung seinen TCP/IP Stack mit dieser Adresse initialisieren. Nach dem erfolgreichen Setzen der IP-Adresse wird eine Kommunikationsverbindung zum IO-Netzwerkteilnehmer etabliert.
Die Soll-IP-Adresse kann hierbei bereits in der Sollkonfiguration enthalten sein oder wird vom IO-Controller aus einem DNS-Server ausgelesen.

In Bezug auf die Vergabe des Stationsidentifikators nach dem Stand der Technik ergeben sich insbesondere im Falle eines Netzwerkteilnehmeraustausches weitere wesentliche Nachteile, da ein ausgetauschtes Gerät in dem Profinet-IO System zunächst wieder den ursprünglichen Stationsidentifikator erhalten muss.

Dies ist im Reparaturfall häufig nur mit Spezialwissen möglich, insbesondere wenn mit einem komplexen Softwaretool gearbeitet werden muss.

Erfolgt die Ablage des Stationsidentifikators im Gerät auf einem wechselbaren Speichermedium, der grundsätzlich auf einfache Weise austauschbar ist, hat dies jedoch erhöhte Kosten zur Folge. Darüber hinaus besteht insbesondere bei der Verwendung von verbreiteten Standardmedien, wie z. B. Compact-Flash-Speicherkarten, die gesteigerte Möglichkeit zum Diebstahl.

Darüber hinaus ist der manuelle Vorgang der Vergabe von Stationsidentifikatoren fehleranfällig und insgesamt ein aufwendiger Prozess.

Aufgabe der Erfindung ist es somit, einen Weg aufzuzeigen, mit welchem die Vergabe von bei Profinet-10 Systemen notwendigen Stationsidentifikatoren, auf der Basis welcher die nachfolgende automatische Netzwerk-Teilnehmergeräteadressierung mittels einer Ermittlung von und einer Zuordnung zwischen logischen und physikalischen Adressen durchgeführt wird, auf wesentlich einfachere und fehlerunanfälligere Weise gewährleistet ist.

Die Erfindung ist auf höchst überraschende Weise bereits durch ein Verfahren, die Verwendung eines Adresswahlschalters und eine Vorrichtung mit den Merkmalen der angehängten unabhängigen Ansprüche 1, 3 und 5 gegeben.

Vorteilhafte und/oder bevorzugte Ausführungsformen und Weiterbildungen sind Gegenstand der jeweiligen Unteransprüche.

Erfindungsgemäß ist somit vorgesehen ein Profinet-IO kompatibles Teilnehmergerät mit einem Wahlschalter derart auszubilden, dass der Stationsidentifikator sich unmittelbar aus der jeweiligen Einstellung des Wahlschalters in Kombination mit einem für eine jeweilige bestimmte Gruppe von Teilnehmergeräten spezifischen, fest vorgegebenen Gruppenidentifikator ergibt.

Durch Vorgeben eines Profinet IO-kompatiblen Stationsidentifikator durch Einstellung eines unmittelbar am Gerät angeordneten Wahlschalters derart, dass die Generierung eines Netzwerkteilnehmergeräteidentifikator durch die jeweilige Einstellung des Schalters in Kombination mit einem für jedes Profinet-IO kompatible Gerät fest vorgegebenen Teilidentifikators, der für eine spezifische, das Gerät umfassende Gerätegruppe festgelegt ist, bewirkt wird, sind alle vorstehend beschriebenen Probleme des Standes der Technik gelöst.

Darüber hinaus erhöht sich durch die automatische Vorgabe eines jeweiligen Netzwerkteilnehmergeräteidentifikators basierend auf einem einer jeweiligen Gruppe einschließlich Untergruppen und Typen, welchem das Gerät zugeordnet ist, fest vorgegebenen Teilidentifikator und einem unmittelbar am Gerät individuell einstellbaren zweiten Teilidentifikator die Anzahl der insgesamt im Netzwerk auf einfache Weise adressierbaren Teilnehmergeräte innerhalb einer Profinet 10-kompatiblen Maschine/Anlage deutlich, da der einstellbare Teilidentifikator nur innerhalb aller Netzwerkteilnehmergeräte einer Gruppe eindeutig sein muss, bei unterschiedlichen Netzwerkteilnehmergerätetypen jedoch mehrfach einstellbar ist.

Diese Adresswahlschalter können beispielsweise in Form von Drehwahlschaltern oder sogenannten DIP (Dual Inline Package)-Schaltern ausgeführt sein.

Beispiele für Netzwerkteilnehmergruppen, denen jeweils ein gemeinsamer Gruppenidentifikator fest zugeordnet ist, sind Sensoren, Aktoren, Buskoppler oder I/O-Server für eine Anlagenperipherie.

Werden in bevorzugter Weiterbildung mehrere Wahlschalter am Gerät vorgesehen, ist durch die geräteinterne Verknüpfung der einstellbare Teilidentifikator in weitere Unter-Teilidentifikatoren untergliederbar, so dass eine weitergehende Erhöhung der Anzahl von adressierbaren Netzwerkteilnehmergeräten innerhalb einer Maschine/Anlage eines Profinet IO-Systems gewährleistet wird.

Die Erfindung wird nachfolgend anhand eines Ausführungsbeispiels beschrieben.

Ein Anwender verwendet in seiner innerhalb eines Profinet IO-Systems eingebetteten Maschine/Anlage mehrere Netzwerkteilnehmergeräte vom Typ "A" und vom Typ "B". Beispielsweise sind vier Netzwerkteilnehmer vom Typ "A" und fünf Netzwerkteilnehmer vom Typ "B" im System einzubinden. An den fünf Netzwerkteilnehmern vom Typ "A" wird über einem am Gerät ausgebildeten Adresswahlschalter die Zahl "1", "2", "3", "4" bzw. "5" eingestellt. Entsprechend stellt er an den Netzwerkteilnehmern vom Typ "B" durch Betätigen der entsprechenden Adresswahlschalter am Gerät die zahl "1", "2", "3" bzw. "4" ein. Unter Ansprechen werden automatisch die jeweiligen Stationsidentifikatoren in einer Kombination aus einer Typenkennung und der Auswahl über den Adresswahlschalter ermittelt, z.B. "A1", "A2", "A3", "A4", "A5", "B1", "B2", "B3" und "B4". Anschließend kann die Vergabe und Zuordnung von logischen und/oder physikalischen Netzwerk-Teilnehmeradressen unter Verwendung der Stationsidentifikatoren bewirkt werden.

Wird ein Gerät ausgetauscht, muss an dem "neuen" Gerät lediglich die gleiche Stellung des Adresswahlschalters vorgenommen werden wie an dem "alten" auszutauschendem Gerät. Dadurch ergibt sich automatisch der identische Stationsidentifikator für das ausgetauschte Gerät.

## Patentansprüche

1. Profinet kompatibles Gerät mit wenigstens einem Adresswahlschalter, ausgebildet, die Vorgabe eines Stationsidentifikators, welcher vor einer Zuordnung physikalischer und logischer Netzwerk-Adressen jedem Profinet-IO Netzwerkteilnehmer als symbolischer Name zur Identifizierung im Netzwerk zur anschließenden eindeutigen Adressierung vergeben wird, aus einer jeweiligen Einstellung des Adresswahlschalters in Kombination mit einem zweiten, dem Gerät fest vorgegebenen und einem spezifischen, das Gerät umfassenden Gerätegruppe zugeordneten Identifikator zur Vergabe von wenigstens einer auf dem Stationsidentifikator basierten Netzwerk-Teilnehmergeräteadresse zu bewirken.

2. Gerät nach vorstehendem Anspruch, mit dem fest vorgegebenen Identifikator zum Identifizieren eines zu einer spezifischen Gruppe von Sensoren, Aktoren, Buskoppler oder I/O-Server für eine Anlagenperipherie zugeordneten Gerätes.

3. Verwenden eines Adresswahlschalter für ein Profinet-IO kompatibles Gerät zum Bewirken der Vorgabe eines Stationsidentifikators, welcher vor einer Zuordnung physikalischer und logischer Netzwerk-Adressen jedem Profinet-IO Netzwerkteilnehmer als symbolischer Name zur Identifizierung im Netzwerk zur anschließenden eindeutigen Adressierung vergeben wird, aus einer jeweiligen Einstellung des Adresswahlschalters in Kombination mit einem zweiten, dem Gerät fest vorgegebenen Identifikator einer spezifischen Gerätegruppe zur nachfolgenden Vergabe von Netzwerk-Teilnehmergeräteadressen unter Verwendung des Stationsidentifikators.

4. Verwenden eines Adresswahlschalter nach vorstehendem Anspruch, in Art eines Drehwahlschalters oder eines DIP-Schalters.

5. Verfahren zum Vorgeben eines Stationsidentifikator auf einem Profinet IO-kompatiblen Teilnehmergerät umfassend die Schritte:
Einstellen wenigstens eines unmittelbar am Gerät angeordneten Wahl schalters in eine gewünschte Wahlstellung, unter Ansprechen auf die Wahlstellung automatisches Generieren eines dem Gerät zugewiesenen Stationsidentifikators, welcher vor einer Zuordnung physikalischer und logischer Netzwerk-Adressen jedem Profinet-IO Netzwerkteilnehmer als symbolischer Name zur Identifizierung im Netzwerk zur anschließenden eindeutigen Adressierung vergeben wird, durch Kombination eines aus der Wahlstellung resultierenden Teilidentifikators mit einem, dem Gerät fest vorgegebenen zweiten Teilidentifikators einer spezifischen Gerätegruppe, und Vergeben von wenigstens einer auf dem Stationsidentifikator basierten Netzwerk-Teilnehmergeräteadresse.

## Claims

1. Profinet-compatible device with at least one address selector switch, designed to bring about the predetermination of a station identifier, which prior to allocation of physical and logic network addresses is allocated to each Profinet-IO network subscriber as symbolic name for identification in the network for the subsequent unique addressing, from a respective setting of the address selector switch combined with a second identifier permanently assigned to the device and specifically allocated to a device group comprising the device for allocation of at least one network subscriber device address based on the station identifier.

2. The device according to the above claim with the permanently assigned identifier for identifying a device assigned to a specific group of sensors, actuators, bus couplers or I/0-servers for a plant periphery.

3. Usage of an address selector switch for a Profinet-IO-compatible device for bringing about the assignment of a station identifier which prior to allocation of physical and logic network addresses is assigned to each Profinet-IO network subscriber as symbolic name for identification in the network for subsequent unique addressing, from a respective setting of the address selector switch combined with a second identifier permanently assigned to the device of a specific device group for the subsequent allocation of network subscriber device addresses using the station identifier.

4. Usage of an address selector switch according to the above claim in the type of a rotary selector switch or a DIP-switch.

5. A method for assigning a station identifier on a Profinet-IO-compatible subscriber device comprising the steps:
Setting of at least one selector switch directly arranged on the device in a desired selection position subject to responding to the selected position, automatic generation of a station identifier assigned to the device which prior to allocation of physical and logic network addresses is assigned to each Profinet-IO network subscriber as symbolic name for identification in the network for the subsequent unique addressing, through combination of a part identifier resulting from the selected position with a second part identifier of a specific device group permanently assigned to the device and assigning of at least one network subscriber device address based on the station identifier.

## Revendications

1. Appareil compatible avec un Profinet, comportant au moins un sélecteur d'adresses, pour l'attribution d'un identifiant de station à chaque utilisateur de réseau du Profinet IO, préalablement à l'allocation des adresses de réseau physiques et logiques, en tant que nom symbolique pour l'identification dans le réseau en vue d'un adressage univoque ultérieur, à partir d'un réglage correspondant du sélecteur d'adresses, en combinaison avec un deuxième identifiant attribué fixement à l'appareil et d'un identifiant spécifique à un groupe d'appareils comprenant l'appareil en question, pour l'allocation d'au moins une adresse d'utilisateur de réseau basée sur l'identifiant de station.

2. Appareil selon la revendication précédente, avec l'identifiant fixement indiqué en vue de l'identification d'un appareil appartenant à un groupe spécifique de détecteurs, d'activateurs, de coupleurs de bus ou de serveurs 10 pour la périphérie d'une installation.

3. Utilisation d'un sélecteur d'adresses pour un appareil compatible avec un Profinet 10, pour effectuer l'attribution d'un identifiant de station, qui est attribué à chaque utilisateur de réseau du Profinet IO, préalablement à l'allocation des adresses de réseau physiques et logiques, en tant que nom symbolique, pour l'identification dans le réseau en vue d'un adressage univoque ultérieur, à partir d'un réglage correspondant du sélecteur d'adresses, en combinaison avec un deuxième identifiant attribué fixement à l'appareil et spécifique à un groupe d'appareils, pour l'allocation d'une adresse d'utilisateur de réseau à partir de l'identifiant de station.

4. Utilisation d'un sélecteur d'adresses selon la précédente revendication, conçu comme un commutateur rotatif ou un commutateur DIP.

5. Procédé pour l'indication d'un identifiant de station sur un appareil d'utilisateur compatible avec un Profinet 10, comprenant les étapes suivantes :
réglage d'au moins un sélecteur monté directement sur l'appareil dans une position au choix, entraînant une génération automatique d'un identifiant de station alloué à l'appareil en tant que nom symbolique pour chaque utilisateur de réseau du Profinet IO, préalablement à l'attribution d'adresses de réseau physiques et logiques, pour une identification dans le réseau en vue d'un adressage univoque ultérieur, par la combinaison d'un identifiant partiel résultant de la position choisie avec un deuxième identifiant d'un groupe spécifique d'appareils, fixement défini pour l'appareil, et attribution d'au moins une adresse d'utilisateur de réseau basée sur l'identifiant de station.
